# NEW EUROPEAN PATENT SPECIFICATION

(11) **EP 0 257 513 B2**
(45) Date of publication and mention of the opposition decision: **01.05.1996**
(45) Mention of the grant of the patent: 21.07.1993
(21) Application number: 87111918.6
(22) Date of filing: 18.08.1987
(51) Int. Cl.: C09D 163/00, C08L 63/00, C08G 59/42

(54) **Process for coating substrates with thermosetting high solids coating compositions of epoxies, polyols and anhydrides**
Verfahren zur Beschichtung von Substraten mit wärmehärtbaren Beschichtungszusammensetzungen mit hohem Feststoffgehalt auf der Basis von Epoxyden Polyolen und Anhydriden
Procédé pour revêtir des substrates avec des Composition de revêtement thermodurcissable à haute teneur en matière sèche à base d'époxydes, de polyols et d'anhydrides

(30) Priority: 21.08.1986 US 898665; 21.08.1986 US 898670
(43) Date of publication of application: 02.03.1988
(73) Proprietor: PPG INDUSTRIES, INC., Pittsburgh Pennsylvania 15272 (US)
(72) Inventor: Blackburn, William Pelham, Evans City, Pa. 16033 (US); Ambrose, Ronald Ruthvoyne, Allison Park, Pa. 15101 (US); Porter, Samuel, Jr., Natrona Heights, Pa. 15065 (US); Burkholder, Mary Jo, Mars, Pa. 16046 (US)
(74) Representative: Sternagel, Hans-Günther, Dr.

(56) References cited:
- EP-A- 0 029 595
- EP-A- 0 134 691
- WO-A-84/00770
- WO-A-84/00771
- DE-A- 2 642 465
- GB-A- 1 156 269
- US-A- 3 000 848
- US-A- 3 431 237
- Lackkunstharze, C. Hansen Verlag, München, 1971, S. 179
- Karsten, Lackrohstoff-Tabellen, Curt R. Vincentz Verlag, Hannover, 1981, Seiten 384, 416, 417
- Lehrbuch der Lacke und Beschichtungen, Kittel, 1977, Band V, S. 465, Zeile 10

## Description

### Field of the Invention:

The present invention is in the field of crosslinkable compositions comprising epoxy resins and anhydride curing agents. More specifically, the present invention relates to the use of certain crosslinkable coating compositions having low volatile organic content in color-plus-clear coating applications.

### Brief Description of the Prior Art:

Color-plus-clear coating systems involving the application of a colored or pigmented base coat to a substrate followed by the application of a transparent or clear top coat to the base coat are becoming increasingly popular as original finishes for automobiles. The color-plus-clear systems have outstanding gloss and distinctness of image, and the clear coat is particularly important for these properties. Illustratively, two-pack clear coat compositions comprising polyols such as polyester polyols, polyurethane polyols and acrylic polyols, and polyisocyanate curing agents give outstanding gloss and distinctness of image.

US.A-3,000,848 refers to curable epoxide compositions comprising bis(2,3-epoxycyclopentyl)ether, polyols and polycarboxylic acid anhydrides and acidic and basic cure catalysts. The anhydrides are difunctional polycarboxylic acid anhydrides.

US-A-3,431,237 discloses epoxy resins prepared by curing together a polyalkylene glycol and a polyepoxide resin with an acid anhydride curing agent and accelerator therefor.

From EP-A-134 691 curable coating compostions are known which are based upon a hydroxy-group containing compound together with a specified epoxide/carboxylic anhydride crosslinking system. The anhydride contains at least two cyclic carboxylic anhydride groups.

DE-A-26 42 465 refers to molding compositions comprising a lower molecular weight polyol, a cycloaliphatic epoxide compound and at least a carboxylic acid anhydride.

GB-A-1,156,269 discloses epoxy resin compositions comprising a halogen-free non-aromatic polyepoxide, a non-aromatic polyester having a hydroxyl number of at least 30 (meq OH/100 g) and a non-aromatic polycarboxylic acid anhydride.

It is the object of the present invention to provide a process for coating a substrate with a thermosetting high solids coating composition having low volatile organic content (voc) and excellent adhesion.

A process for applying a composite coating to a substrate by applying to the substrate a colored film-forming composition to form a base coat and applying to said base coat a clear film-forming composition via a wet-on-wet technique before the base coat has been cured to form a transparent top coat over the base coat followed by heating the composite coating to a temperature of from 71°-177°C (160°-350°F) cure and conjointly harden both coating layers of the composite coating, by using for the clear coat a high solids thermosetting coating composition having a solids content of 45% or higher comprising:
(a) an aliphatic polyepoxide containing 2 or more epoxy groups per molecule and having an epoxide equivalent weight of 50 to 1000 selected from
   glycidyl ethers selected from
      glycerol polyglycidyl ether, diglycerol polyglycidyl ether, trimethylolpropane polyglycidyl ether, sorbitol polyglycidyl ether all having three epoxy groups,
   glycidyl esters,
   or a mixture thereof
(b) a polyol having a hydroxyl value of 30 to 1000,
(c) a polyacid anhydride having a molecular weight of 100 to 500,
(d) a cure catalyst in an amount of 0.2 to 10 percent by weight based on resin solids, selected from quaternary ammonium salts, phosphonium salts or tertiary amines, wherein the equivalent ratio of anhydride to hydroxyl is from 0.5 to 20:1 and the equivalent ratio of polyepoxide to anhydride is from 0.5 to 2:1 and is sufficient to form a curable product and the thermosetting coating compositions are substantially free of other curing agents, particularly melamine resins.

The coating compositions of this embodiment have been found to be particularly suited to painting automobiles in the color-plus-clear mode to provide coatings having outstanding appearance and other desirable properties.

In this text, the terms molecular weight, solids content, sprayability, volatile organic content (VOC) and appearance are defined as follows. The term "molecular weight" refers to a number average molecular weight as determined by gel permeation chromatography using a standard (such as polystyrene or glycol). Therefore, it is not the actual number average molecular weight which is measured but a number average molecular weight which is relative to the standard.

The solids (i.e.. the non-volatile) content of a composition is determined by ASTM D-2369 testing modified as follows: 0.3 grams of the composition is mixed with 5 milliliters of 1:1 mixture of acetone and tetrahydrofuran and heated at 110°C for 1 hour in a forced draft oven. The composition is then cooled in a desiccator, reweighed and the non-volatile content calculated. The percentage by weight of the composition remaining is the solids content.

The term "sprayability" means the maximum concentration of solids at which the coating composition can form a uniformly deposited coating, under normal spraying conditions of, say, temperature, pressure, and spray equipment design such as entails the use of an air suction gun operating at 413.7 x 10³ Pa (60 psi) with a No. 30 air cap. This maximum concentration is solvent dependent and usually occurs in a viscosity range of 12 to 80 and preferably at 20 to 24 seconds with a No. 4 Ford cup at room temperature after thinning with a solvent such as a mixture of methyl amyl ketone and ethoxyethyl acetate. Above this maximum concentration, appearance of the coating as manifested by say leveling and solvent popping typically becomes unacceptable.

The VOC is defined as the weight per volume of any compound of carbon which evaporates from a paint or related coating material under the specific conditions for the determination of the non-volatile content of that material. This does not include water which is volatile under the test conditions. Thus, the water content of the material undergoing analysis must be determined. To obtain the VOC of a sample, the non-volatile content, water content and the density of the material are determined. The VOC number is calculated by correcting the total organic volatile content for the water content and dividing by the volume of the paint corrected for the water content. The determination of the VOC is by ASTM D-3960 testing which entails heating the paint or related coating material at 110°C. for 1 hour.

Appearance is defined in terms of distinctness of image (DOI) which is measured by a Dori-Gon Meter® D47-6 manufactured by Hunter Laboratories.

The coating compositions to be used in the process of this invention have a sprayable solids content of 45 percent or higher and preferably 80 percent or higher, and VOC of less than 431 g/ℓ (3.6 pounds per gallon), preferably less than 360 g/ℓ (3 pounds per gallon) and and down to about 216 g/ℓ (1.8 pounds per gallon). As described more fully below, the components of the composition are selected on the basis that would result in high solids coating compositions having properties as described herein.

The polyepoxides useful herein are low of molecular weight.

The polyepoxides contain more than two and preferably three or more epoxy groups per molecule. The polyepoxides have epoxide equivalent weights of 50 to 1000 and preferably 125 to 500. The aliphetic polyepoxides are certain glycidyl ethers or esters in general of for example acrylic polymers or a mixture thereof.

The glycidyl ethers are glycerol polyglycidyl ether (having 3 epoxy groups); trimethylolpropane polyglycidyl ether (having 3 epoxy groups); diglycerol polyglycidyl ether (having 3 epoxy groups); sorbitol polyglycidyl ether (having 3 epoxy groups), such as is available from Nagase America Corporation under the tradename DENACOL.

Illustrative examples of the glycidyl acrylic polymers are copolymers of ethylenically unsaturated monomers at least one of which contains a glycidyl group. The copolymers are prepared by free radical polymerization of the ethylenically unsaturated monomers. Examples of the ethylenically unsaturated monomers containing a glycidyl group can be a glycidyl acrylate, a glycidyl methacrylate, and an allyl glycidyl ether. The other copolymerizable monomer can be alkyl esters of acrylic or methacrylic acid, e.g.. ethyl acrylate, butyl acrylate or 2-ethylhexyl acrylate, ethyl methacrylate, butyl methacrylate and the like; vinyl monomers such as styrene, vinyl toluene and the like.

The polyepoxides are aliphatic. Also, the polyepoxides can be in the form of solids or liquids, with the liquids being preferred.

The hydroxyl group-containing polyfunctional material useful herein are a polyol of low molecular weight and contain more than two hydroxyl groups and preferably three or more hydroxyl groups and more preferably four or more hydroxyl groups per molecule. The polyols have a hydroxyl value of 30 to 1000 and preferably 75 to 300. Typical, but non-limiting examples thereof are polyols which can be selected from the group consisting of simple polyols and polymeric polyols such as polyester polyols, polyether polyols, polyurethane polyols, acrylic polyols and a mixture thereof. Illustratively the polyester polyols can be prepared by reacting polyacids or their anhydrides. e.g., hexahydrophthalic anhydride, with polyols or their equivalents. e.g.. trimethylolpropane.

The polyacid anhydrides useful herein are of low molecular weight, and are polyacid anhydrides comprising monoanhydrides. The molecular weight of the anhydrides can be in the range of 100 to 500 and preferably 100 to 200. Examples of the monoanhydrides are alkyl hexahydrophthalic anhydride wherein the alkyl group has up to 7 carbon atoms. A particularly preferred monoanhydride is methyl hexahydrophthalic anhydride. Other anhydrides that can be used include aliphatic, including cycloaliphatic, olefinic and cycloolefinic anhydrides and aromatic anhydrides. Substituted aliphatic and aromatic anhydrides are also included within the definition of aliphatic and aromatic provided the substituents do not adversely affect the reactivity of the anhydride or the properties of the resultant polyesters. Examples of substituents would be chloro, alkyl and alkoxy. Examples of the anhydrides include succinic anhydride, methylsuccinic anhydride, dodecenylsuccinic anhydride, octadecenylsuccinic anhydride, phthalic anhydride, tetrahydrophthalic anhydride, methyltetrahydrophthalic anhydride, hexahydrophthalic anhydride, alkylhexahydrophthalic anhydrides such as methylhexahydrophthalic anhydride, tetrachlorophthalic anhydride, endomethylene tetrahydrophthalic anhydride, chlorendic anhydride, isotonic anhydride, citraconic anhydride and maleic anhydride. The curing agents of the claimed invention consist essentially of polyacid anhydrides consisting essentially of monoanhydrides such as described above.

The cure catalysts are selected from the group consisting quaternary ammonium salt. eg., tetrabutylammonium bromide, or tetrabutylammonium fluoride; phosphonium salts; or tertiary amines such as dimethyldodecylamine and dimethylethanolamine.

In accordance with the description of the invention, the components of the coating composition are of such a functionality that the coating composition can be heated to a temperature sufficient to provide effective cure. Illustratively, the polyepoxide contain two or more epoxy groups per molecule and the polyol contain two or more hydroxyl groups per molecule with the proviso the sum of the epoxy and hydroxyl functionalities is greater than four and preferably is about five or higher. In the particularly preferred process of the invention wherein the coating compositions cure effectively to provide good solvent resistance and hardness and also provide the remarkable appearance described herein, it is preferred to employ respectively polyepoxides and hydroxyl group containing polyfunctional materials such as polyols having high functionality of three or more.

The proportion in which the components are employed is such as leads to the formation of a gellable composition that can cure effectively. Hence, the equivalent ratio of the anhydride to the hydroxyl group is from 0.5 to 20:1 and preferably 1 to 5:1. The equivalent ratio of the polyepoxide to the anhydride is from 0.5 to 2:1 and preferably 0.8 to 2:1. The cure catalyst is employed in an amount of 0.2 to 10 percent by weight and preferably 0.5 to 5 percent by weight based on resin solids.

The aforedescribed components can be formulated into the coating compositions which are typically solvent based. Unlike the case of art-related coating compositions, other curing agents such as aminoplasts, e.g., melamines are not required to provide effective cure.

It is a distinct feature of the invention that the thermosetting coating compositions used for the process are free of, or substantially free of other curing agents, particularly melamine resins. This feature of the invention is all the more significant in cases wherein appearance is an important property.

The coating compositions preferably contain as cure catalysts tertiary amines or quaternary ammonium salts.

In the coating formulation, additives such as ultraviolet light absorbers and/or stabilizers, flow control agents, antioxidants, plasticizers sag control agents and the like can be employed. These additives can be employed in amounts up to about 25 percent by weight based on the total resin weight.

It is envisaged that the coating compositions to be used in the process of this invention can be practiced as multi-pack such as a two-pack coating compositions. For example, the polyepoxide, polyol can be contained in one pack, and the anhydride and cure catalyst can be contained in another.

The coating composition can be applied to a substrate by any of the conventional coating techniques such as brushing, spraying, dipping or flowing, but it is preferred that spray applications be used since this gives the best appearance. Any of the known spray techniques may be employed such as compressed air spraying, electrostatic spraying and either manual or automatic methods which are preferred.

It is a distinct feature of the invention that the high solids thermosetting coating compositions display acceptably good sag control at a film thickness up to about 50.8 µm (2 mils). Thus, relatively lower amounts of sag control agents need to be added to the coating composition. Therefore, these coating compositions do not suffer a reduced solids content, as is otherwise the case with art-related high solids compositions wherein sag control agents are added.

After application of the coating composition to the substrate, the coated substrate is heated to cure the coating. In the curing operation, solvents are driven off and the film-forming material of the top coat and, of the base coat is cured. The curing operation is carried out at a temperature in the range of from 71-177°C. (160-350°F.). The thickness of the coating is usually from 25.4 - 127 µm (1 to 5), preferably 30.5 to 76.2 µm (1.2 to 3 mils).

The compositions used in the process of the present invention, prepared with the aliphatic polyepoxides, are used to formulate clear coats for use in a color-plus-clear application. In a color-plus-clear application, a composite coating is applied to a substrate. The process comprises applying to the substrate a pigmented or colored film-forming composition to form a base coat and applying to the base coat a second film-forming composition to form a transparent top coat over the base coat.

The film-forming composition of the base coat can be any of the compositions useful in coating applications, particularly automotive applications in which the color-plus-clear coating applications are finding their most use. A film-forming composition conventionally comprises a resinous binder and a pigment to act as a colorant. Particularly useful resinous binders are acrylic polymers, polyesters including alkyds and polyurethanes. The resinous binder for the base coat can be an organic solvent-based material such as those described in US-A-4,220,679, note column 2, line 24, continuing through column 4, line 40. Also, water-based coating compositions such as those described in U S-A-4,403,003 and U S-A-4,147,679 can also be used as the binder in the base coat composition. The resinous binder for the base coat can also be the same as those of the present invention.

The base coat composition also contains pigments including metallic pigmentation to give it color. Examples of suitable pigmentations for the base coat are described in the aforementioned U S-A-4,220,679; 4,403,003 and 4,147,679.

Optional ingredients in the base coat composition are those which are well known in the art of formulating surface coatings and include surfactants, flow control agents, thixotropic agents, fillers, anti-gassing agents, organic co-solvents, catalysts and other customary auxiliaries. Examples of these materials and suitable amounts are described in the aforementioned U S-A-4,220,679; 4,403,003 and 4,147,679, but they are most often applied by spraying. The coating can be applied by air spraying and electrostatic spraying in either manual, or automatic methods which are preferred.

During application of the base coat to the substrate, a film of the base coat is formed on the substrate typically in a thickness of 2.54 - 127 µm (0.1 to 5) and preferably 2.54 - 50.8 µm (0.1 to 2 mils). After forming a film of the base coat on the substrate, solvent, that is, organic solvent and/or water, is driven out of the base coat film by heating or simply an air drying period before application of the clear coat. Preferably, the heating step will be for a short period of time sufficient to insure that the clear top coat composition can be applied to the base coat without the former dissolving the base coat composition, that is, "striking in". Suitable drying conditions will depend on the particular base coat composition, on the ambient humidity with certain water-based compositions, but in general a drying time of from 1 to 5 minutes at a temperature of 20-79°C. (80-175°F) will be adequate to insure that mixing of the two coats is minimized. At the same time, the base coat film is adequately wetted by the clear top coat composition so that satisfactory intercoat adhesion can be obtained. Also, more than one base coat and more than one top coat may be applied to develop optimum appearance. Usually between coats, the previously applied base coat or top coat is flashed, that is, exposed to ambient conditions for 1 to 20 minutes.

The clear top coat composition may be applied to the base coat by any of the conventional coating techniques mentioned above, although spray applications are typical. As mentioned above, the clear top coat is applied to the base coat via a wet-on-wet technique before the base coat has been cured. The two coatings are then heated to a temperature sufficient to cure and conjointly harden both coating layers. Curing conditions such as described above can be used. In the preferred embodiments of the invention, the cured coatings are hard, solvent resistant and possess a remarkable appearance with a DOI of 90 to 100 and other desirable film properties.

The invention will be further defined by reference to the following examples. Unless otherwise indicated, all parts are by weight.

### Example A

This example illustrates a high solids thermosetting clear coating composition to be used in the process of this invention and the methods of preparing and using the same.

| Ingredients | Parts by Weight (grams) | Solids |
|---|---|---|
| PACK A | | |
| DENACOL® 421¹ | 41.3 | 41.3 |
| Polyester polyol | 18.8 | 13.9 |
| TINUVIN® 328³ | 3.0 | 3.0 |
| Xylene | 5.9 | |
| Methyl ethyl ketone | 14.5 | |
| TINUVIN® 292⁴ | 1.0 | 1.0 |
| Silicone fluid⁵ | 0.1 | 0.1 |
| ARMEEN® DM 12D⁶ | 3.0 | 3.0 |
| Cellulose acetate butyrate | 4.0 | 1.0 |

| PACK B | | |
|---|---|---|
| Methylhexahydrophthalic anhydride | 44.8 | 44.8 |

| | | |
|---|---|---|
| ¹Diglycerol polyglycidyl ether from Nagase America Corp. | | |
| Tetrahydroxy-functional polyester having a hydroxyl value of about 412.8, an acid value of about 7.8, and is derived from trimethylolpropane and hexahydrophthalic anhydride. | | |
| ³UV absorber available from Ciba Geigy Corp. | | |
| ⁴UV stabilizer available from Ciba Geigy Corp. | | |
| ⁵Available as DC 200 10CS from Dow Corning Co. | | |
| ⁶Dimethyldodecylamine available from Akzo Chemical Co. | | |

The above ingredients were formulated into a clear coating composition by mixing the above ingredients at a low shear with good agitation. The resultant composition had a solids content of 87 percent measured at 110°C. after 60 minutes, and a viscosity of 22 seconds measured with a number 4 Ford cup.

The clear coat was spray applied over a panel of steel substrates that had been electrocoated with UNIPRIME® (which is a cationic electrodepositable composition available from PPG Industries, Inc.) and baked at 171°C. (340°F.) for 30 minutes. The electrocoated panels were spray painted with a base coat (available from ICI Limited as M-979) to a film thickness of 7.6 µm (0.3 mil). The panels were then flashed for 3 minutes at 66°C. (150°F.), before the above clear coat was spray applied. The resultant color-plus-clear coat had a film thickness of 38.1 µm (1.5 mils), DOI was 90, and Tukon hardness of 9.0.

### Example B

This example also illustrates the clear coating compositions to be used in the process of this invention and the methods of preparing and using the same.

| Ingredients | Parts by weight (grams) | Solids |
|---|---|---|
| PACK A | | |
| TINUVIN® 328 | 3.0 | 3.0 |
| Xylene | 6 | |
| TINUVIN® 292 | 1 | 1.0 |
| Silicone fluid | 1 | |
| ARMEEN® DM 12D | 3.0 | 3.0 |
| Cellulose acetate butyrate | 4.0 | 1.0 |
| Tetrahydroxy-functional polyester¹ | 11.4 | 8.4 |
| Epoxy-containing acrylic polymer | 104.0 | 60.3 |

| PACK B | | |
|---|---|---|
| Methylhexahydrophthalic anhydride | 31.2 | 31.2 |

| | | |
|---|---|---|
| ¹Same as in Example A. | | |
| 40% glycidyl methacrylate/20% methyl methacrylate/20% butyl methacrylate/20% butyl acrylate in xylene; having a solids content of 58.1 percent and an epoxy equivalent of 650. | | |

The above ingredients were formulated by mixing them in the order indicated above at low shear with good agitation. The resultant composition had a determined solids content of 68.7 percent (at 110°C. for 60 minutes) and viscosity of 31.5 seconds measured with a number 4 Ford cup.

The clear coating was spray applied wet-on-wet in a color-plus-clear mode as described in Example A. The resultant coating had a film thickness of 50.8 µm (2 mils), DOI 60 and Tukon hardness of 12.75.

### Example C

This example further illustrates the high solids thermosetting coating compositions to be used in the process of this invention and methods of making and using the same. Notably, the polyol employed herein is an acrylic polyol which was prepared as follows.

| Reactor Charge | |
|---|---|
| Ingredients | Parts by Weight (grams) |
| Hexyl acetate | 615 |

| Feed A | |
|---|---|
| Ingredients | Parts by Weight (grams) |
| Hydroxypropyl acrylate | 1120 |
| Butyl methacrylate | 1064 |
| Butyl acrylate | 11.2 |
| Styrene | 11.2 |
| Methyl methacrylate | 11.2 |
| Acrylic acid | 22.4 |

| Feed B | |
|---|---|
| Ingredients | Parts by Weight (grams) |
| Hexyl acetate | 300 |
| 6% LUPERSOL®-531-80B¹ | 168 |

| | |
|---|---|
| ¹1,1-di-tertiary-amyl peroxycyclohexane. | |

| Feed C | |
|---|---|
| Ingredients | Parts by Weight (grams) |
| Hexyl acetate | 15 |
| 0.2% LUPERSOL®-531-80B | 5.6 |

| Feed D | |
|---|---|
| Ingredients | Parts by Weight (grams) |
| Hexyl acetate | 15 |
| 0.2% LUPERSOL®-531-80B | 5.6 |

| Feed E | |
|---|---|
| Ingredients | Parts by Weight (grams) |
| Hexyl acetate | 15 |
| 0.2% LUPERSOL®-531-80B | 5.6 |

In a properly equipped reaction vessel, Charge A was heated to reflux. At 165°C., addition of Charge A and Charge B was commenced and carried out over a period of 2 hours and over a temperature range of 165-158°C. Thereafter, at 158°C., Charges C. D and E were added to the reaction mixture at one-hour intervals followed by holding of the resultant mixture for 1 hour after each addition. The final product was discharged and analyzed. Determined solids at 110°C. was 69 percent, viscosity was 1750 mm/g (17.5 stokes), theoretical acid value was 5.45, theoretical hydroxyl value was 151 and molecular weight was 3862.

A coating composition of the above acrylic polyol, epoxy resin and an anhydride was prepared as follows.

| Ingredients | Parts by Weight (grams) | Solids |
|---|---|---|
| PACK A | | |
| TINUVIN® 328 | 3.0 | 3.0 |
| Xylene | 16.9 | |
| TINUVIN® 292 | 1.0 | 1.0 |
| Silicon fluid (DC 200 10CS) | 0.1 | 0.1 |
| ARMEEN® DM 12D | 3.0 | 3.0 |
| Acrylic polyol as described in Example C | 30.8 | 21.6 |
| EPIREZ® 5044¹ | 38.7 | 38.7 |

| PACK B | | |
|---|---|---|
| Methylhexahydrophthalic anhydride | 39.7 | 39.7 |

| | | |
|---|---|---|
| ¹An epoxy resin having low molecular weight and an epoxy equivalent of 165, which is available from Celanese Corp. | | |

The above ingredients were formulated by mixing them in the order indicated above at low shear with good agitation. The resultant composition had a determined solids content of 74.7 percent (at 110°C. over 60 minutes) and a viscosity of 23 seconds measured with a number 4 Ford cup.

The clear coating was spray applied wet-on-wet in a color-plus-clear mode as described in Example A. The resultant coating had a film thickness of 45.7 µm (1.8 mils) and a DOI of 100.

## Claims

1. A process for applying a composite coating to a substrate by applying to the substrate a colored film-forming composition to form a base coat and applying to said base coat a clear film-forming composition via a wet-on-wet technique before the base coat has been cured to form a transparent top coat over the base coat followed by heating the composite coating to a temperature of from 71°-177°C (160°-350°F) to cure and conjointly harden both coating layers of the composite coating, by using for the clear coat a high solids thermosetting coating composition having a solids content of 45% or higher comprising:
(a) an aliphatic polyepoxide containing 2 or more epoxy groups per molecule and having an epoxide equivalent weight of 50 to 1000 selected from
glycidyl ethers selected from
glycerol polyglycidyl ether, diglycerol polyglycidyl- ether, trimethylolpropane polyglycidyl ether, sorbitol polyglycidyl ether all having three epoxy groups,
glycidyl esters,
or a mixture thereof
(b) a polyol having a hydroxyl value of 30 to 1000,
(c) a polyacid anhydride having a molecular weight of 100 to 500,
(d) a cure catalyst in an amount of 0.2 to 10 percent by weight based on resin solids, selected from quaternary ammonium salts, phosphonium salts or tertiary amines, wherein the equivalent ratio of anhydride to hydroxyl is from 0.5 to 20:1 and the equivalent ratio of polyepoxide to anhydride is from 0.5 to 2:1 and is sufficient to form a curable product and the thermosetting coating compositions are substantially free of other curing agents, particularly melamine resins.

2. The process of claim 1,
wherein the polyepoxide (a) comprises three or more epoxy groups per molecule.

3. The process of claim 1,
wherein the polyepoxide (a) is a glycidyl acrylic polymer,

4. The process of claim 1,
wherein the polyol (b) comprises three or more hydroxyl groups per molecule.

5. The process of claim 1,
wherein the polyol (b) is selected from simple polyols or polymeric polyol selected from polyester polyols, polyether polyols, polyurethane polyols, acrylic polyols and a mixture thereof.

6. The process of claim 1,
wherein the polyacid anhydride (c) is an alkyl hexahydrophthalic anhydride, wherein the alkyl group contains up to about seven carbon atoms.

7. The process of claim 6,
wherein the polyacid anhydride (c) is methyl hexahydrophthalic anhydride.

## Patentansprüche

1. Verfahren zum Aufbringen einer Verbundbeschichtung auf einen Träger durch Aufbringen einer gefärbten, filmbildenden Zusammensetzung auf den Träger, um eine Grundbeschichtung auszubilden, und Aufbringen einer klaren, filmbildenden Zusammensetzuung auf die Grundbeschichtung durch Naß-in-Naß-Auftrag, ehe die Grundbeschichtung gehärtet wird, um eine transparente Deckschicht auf der Grundschicht auszubilden, anschließendes Erwärmen der Verbundbeschichtung auf eine Temperatur von 71°C bis 177°C (160°F bis 350°F) zum Härten und um beide Schichten der Verbundbeschichtung zusammen zu vernetzen und auszuhärten, unter Verwendung einer wärmehärtbaren Beschichtungszusammensetzung mit hohem Feststoffgehalt von 45% oder höher für die klare Schicht, enthaltend
(a) ein aliphatisches Polyepoxid, enthaltend zwei oder mehr Epoxygruppen pro Molekül und das ein Epoxidäquivalentgewicht von 50 bis 1000 hat, ausgewählt aus
Glycidylethern, ausgewählt aus Glycerolpolyglycidylether, Diglycerolpolyglycidyl-ether, Trimethylolpropanpolyglycidylether, Sorbitolpolyglycidylether, die alle drei Epoxygruppen aufweisen,
Glycidylestern
oder einer Mischung derselben,
(b) ein Polyol mit einem Hydroxylwert von 30 bis 1000,
(c) ein Polysäureanhydrid mit einem Molekulargewicht von 100 bis 500,
(d) einen Härtungskatalysator in einer Menge von 0,2 bis 10 Gew.-%, bezogen auf Harzfeststoffe, ausgewählt aus quaternären Ammoniumsalzen, Phosphoniumsalzen und tertiären Aminen, wobei das Äquivalentverhältnis von Anhydrid: Hydroxyl von 0,5 bis 20:1 und das Äquivalentverhältnis von Polyepoxid:Anhydrid von 0,5 bis 2:1 beträgt und ausreichend ist, um ein härtbares Produkt auszubilden, und wobei die wärmehärtbaren Beschichtungszusammensetzungen im wesentlichen keine anderen Härtungsmittel, insbesondere keine Melaminharze, enthalten.

2. Verfahren nach Anspruch 1,
**dadurch gekennzeichnet**, daß das Polyepoxid (a) drei oder mehr Epoxygruppen pro Molekül enthält.

3. Verfahren nach Anspruch 1,
**dadurch gekennzeichnet**, daß das Polyepoxid (a) ein Glycidylacrylpolymer ist.

4. Verfahren nach Anspruch 1,
**dadurch gekennzeichnet**, daß das Polyol (b) drei oder mehr Hydroxylgruppen pro Molekül enthält.

5. Verfahren nach Anspruch 1,
**dadurch gekennzeichnet**, daß das Polyol (b) ausgewählt ist aus einfachen Polyolen oder polymeren Polyolen, ausgewählt aus Polyesterpolyolen, Polyetherpolyolen, Polyurethanpolyolen, Acrylpolyolen und einer Mischung derselben.

6. Verfahren nach Anspruch 1,
**dadurch gekennzeichnet**, daß das Polysäureanhydrid (c) ein Alkylhexahydrophthalsäureanhydrid ist, in der die Alkylgruppe bis zu etwa sieben Kohlenstoffatome enthält.

7. Verfahren nach Anspruch 6,
**dadurch gekennzeichnet**, daß das Polysäureanhydrid (c) Methylhexahydrophthalsäureanhydrid ist.

## Revendications

1. Procédé pour appliquer un revêtement composite sur un subjectile par l'application sur ce subjectile d'une composition filmogène colorée de manière à former une couche de fond et l'application sur ladite couche de fond d'une composition filmogène transparente selon une technique mouillé-sur-mouillé avant le durcissement de la couche de fond pour former une couche de finition transparente sur la couche de fond, suivie du chauffage du revêtement composite à une température de 71 à 177°C (165-350°F) de manière à cuire et conjointement durcir les deux couches du revêtement composite, en utilisant pour la couche transparente une composition de revêtement thermodurcissable à haute teneur en solides, possédant une teneur en solides 45% et plus, comprenant
(a) un polyépoxyde aliphatique contenant deux ou plus de deux radicaux époxy par molécule et possédant un équivalent-poids d'époxyde de 50 à 1000, choisi parmi:
des éthers glycidyliques choisis parmi:
un éther polyglycidylique du glycérol, un éther polyglycidylique du diglycérol, un éther polyglycidylique du triméthylolpropane, un éther polyglycidylique du sorbitol, possédant tous trois des radicaux époxy,
des esters glycidyliques ou un mélange de ceux-ci,
(b) un polyol possédant un indice d'hydroxyle de 30 à 1000,
(c) un anhydride de polyacide possédant un poids moléculaire de 100 à 500,
(d) un catalyseur de durcissement en une proportion de 0,2 à 10% en poids, sur base des solides résineux, choisi parmi des sels d'ammonium quaternaire, des sels de phosphonium, ou des amines tertiaires, où le rapport d'équivalence des radicaux anhydride à hydroxyle varie de 0,5 à 20:1 et le rapport d'équivalence des radicaux polyépoxyde à anhydride varie de 0,5 à 2:1 et est suffisant pour former un produit durcissable et les compositions de revêtement thermodurcissable sont sensiblement dépourvues d'autres agents de durcissement, en particulier, des résines de mélamine.

2. Procédé suivant la revendication 1, caractérisé en ce que le polyépoxyde (a) comprend trois ou plus de trois radicaux époxy par molécule.

3. Procédé suivant la revendication 1, caractérisé en ce que le polyépoxyde (a) est un polymère glycidylacrylique.

4. Procédé suivant la revendication 1, caractérisé en ce que le polyol (b) comporte trois ou plus de trois radicaux hydroxyle par molécule.

5. Procédé suivant la revendication 1, caractérisé en ce que l'on choisit le polyol (b) parmi de simples polyols ou des polyols polymériques choisis parmi des polyesterpolyols, des polyétherpolyols, des polyuréthannepolyols, des polyols acryliques et des mélanges de ces composés.

6. Procédé suivant la revendication 1, caractérisé en ce que l'anhydride de polyacide (c) est un anhydride alkylhexahydrophtalique dont le radical alkyle contient jusqu'à environ 7 atomes de carbone.

7. Procédé suivant la revendication 6, caractérisé en ce que l'anhydride de polyacide (c) est l'anhydride méthylhexahydrophtalique.
